# EUROPEAN PATENT APPLICATION

(11) **EP 2 523 307 A2**
(43) Date of publication of application: **14.11.2012**
(21) Application number: 12163334.1
(22) Date of filing: 05.04.2012
(51) Int. Cl.: H02J 13/00

(54) **Systems and methods for use in correcting intermittent utility service outages**

(30) Priority: 13.04.2011 US 201113086102
(71) Applicant: General Electric Company, Schenectady, NY 12345 (US)
(72) Inventor: Thoppay, Rajeshbabu KB, Atlanta, GA 30339-8402 (US); Tracey, James S., Melbourne, FL 32904 (US); Souvannarath, Manyphay, Atlanta, GA 30339-8402 (US)
(74) Representative: Picker, Madeline Margaret

(57) **Abstract**

A system (100) for use in correcting an intermittent utility service outage. The system includes a memory device (110), a processor (115) coupled to the memory device, and a communication interface (135) coupled to the processor. The memory device is configured to store a plurality of service interruptions, wherein each service interruption is associated with at least one site of a plurality of sites. The processor is programmed to determine (320) an interruption occurrence rate corresponding to a first site of the plurality of sites based on service interruptions associated with the first site. The communication interface is configured to transmit (330) an intermittent outage notification to a remote device when the determined interruption occurrence rate exceeds a predetermined maximum interruption occurrence rate.

## Description

### BACKGROUND OF THE INVENTION

The subject matter disclosed herein relates generally to utility networks and, more specifically, to systems and methods for use in identifying and correcting intermittent service outages in a utility network.

At least some known utility networks are used to convey a utility, such as electricity or natural gas, from one or more sources to one or more demand points or sites. In some cases, utility service at a site may be undesirably interrupted. For example, the voltage level at an electricity meter may decrease or fluctuate. Some service interruptions, such as one caused by a severed utility line, may persist until some piece of equipment is repaired or replaced. Other service interruptions may be more temporary. For example, a faulty piece of equipment may malfunction only when subjected to certain operational conditions (e.g., a high load) and/or environmental conditions (e.g., rain or a high temperature). Generally, such equipment resumes normal operation after it is no longer exposed to those conditions.

Some temporary service outages are capable of repetition, yet may evade review by the utility operator. For example, when individual interruptions span a relatively short amount of time, such interruptions may be considered resolved before a technician is dispatched to the site, and/or before a technician arrives at the site and observes abnormal operation. As a result, the root cause of repeated temporary service interruptions may not be identified and resolved unless, and until, a persistent outage occurs. Such service interruptions may therefore remain unresolved for an extended period of time, which over time may impose significant inconvenience and/or downtime costs to the operator of the site.

### BRIEF DESCRIPTION OF THE INVENTION

In one aspect, a system for use in correcting an intermittent utility service outage is provided. The system includes a memory device, a processor coupled to the memory device, and a communication interface coupled to the processor. The memory device is configured to store a plurality of service interruptions, each of which is associated with at least one site of a plurality of sites. The processor is programmed to determine an interruption occurrence rate corresponding to a first site of the plurality of sites based on service interruptions associated with the first site. The communication interface is configured to transmit an intermittent outage notification to a remote device when the determined interruption occurrence rate exceeds a predetermined maximum interruption occurrence rate.

In another aspect, a method for use in correcting an intermittent utility service outage is provided. The method includes identifying by a computing device a plurality of service interruptions associated with a site and with a duration that is longer than a predetermined minimum interruption duration. An interruption occurrence rate corresponding to the site is determined by the computing device based at least in part on the identified service interruptions. An intermittent outage notification is transmitted from the computing device to a remote device when the determined interruption occurrence rate exceeds a predetermined maximum interruption occurrence rate.

In yet another aspect, one or more computer-readable storage media having computer-executable instructions embodied thereon are provided. When executed by at least one processor, the computer-executable instructions cause the at least one processor to identify a plurality of service interruptions associated with a site and with a duration that is longer than a predetermined minimum interruption duration, to determine an interruption occurrence rate corresponding to the site based at least in part on the identified service interruptions, and to create an intermittent outage work order associated with the site when the determined interruption occurrence rate exceeds a predetermined maximum interruption occurrence rate.

### BRIEF DESCRIPTION OF THE DRAWINGS

Fig. 1 is a block diagram of an example computing device;
Fig. 2 is block diagram of an example utility monitoring system including a utility monitoring device, a plurality of utility meters, a plurality of substation monitoring devices, and a client device coupled in communication via a network;
Fig. 3 is a flowchart of an example method that may be used in correcting an intermittent service outage in a utility network;
Fig. 4 is an example graphical interface that may be used with the method shown in Fig. 3; and
Fig. 5 is a flowchart of an example method that may be used to provide a configuration recommendation for use with the method shown in Fig. 3.

### DETAILED DESCRIPTION OF EMBODIMENTS OF THE INVENTION

The embodiments described herein enable intermittent service outages in a utility network to be identified and resolved. As used herein, the term "intermittent outage" refers to a series of temporary utility service interruptions affecting one or more sites. A utility includes, but is not limited to only including, electricity, natural gas, water (e.g., fresh water, sewage, or drainage), television service, and/or wired or wireless telecommunication service.

A utility is conveyed from one or more sources to one or more demand points or sites by a utility network. For example, a source may include a utility generation facility and/or a specific point along a utility transmission line. A site may include, but is not limited to only including, a utility distribution facility (e.g., a substation and/or a transformer), a residential property, a commercial property, and/or an industrial property. The means of conveying a utility may be dependent on the nature of the utility. For example, electricity may be conveyed via electrically conductive cables, whereas natural gas and potable water are generally conveyed via a piping network. Telecommunication service may be conveyed by electrically conductive cables, optical cables, and/or wireless transmission.

Embodiments are described herein with reference to utility networks for electricity. However, embodiments of the present invention may be used to identify and resolve intermittent outages with respect to any type of utility service.

Example technical advantages of the methods, systems, and apparatus described herein includes at least one of (a) identifying a plurality of service interruptions associated with a site and with a duration that is longer than a predetermined minimum interruption duration; (b) determining an interruption occurrence rate corresponding to the site based at least in part on the identified service interruptions; (c) transmitting an intermittent outage notification to a remote device when the determined interruption occurrence rate exceeds a predetermined maximum interruption occurrence rate; and (d) determining a suggested correction based at least in part on one or more corrections associated with a plurality of past intermittent outage work orders.

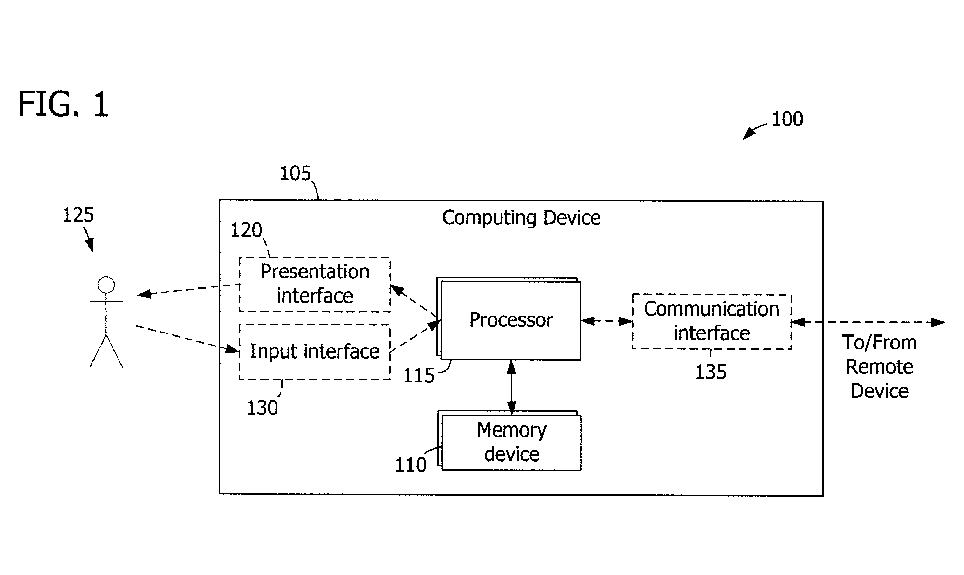

Fig. 1 is a block diagram of an example computer system 100 that includes a computing device 105 including a memory device 110 that may be used to identify and/or correct intermittent service outages in a utility network. In the example embodiment, computing device 105 includes a processor 115 that is coupled to memory device 110 for executing programmed instructions. In some embodiments, executable instructions are stored in memory device 110. Alternatively, executable instructions may be retrieved from another device via a computer network. Computing device 105 is programmable to perform one or more operations described herein by programming processor 115. For example, processor 115 may be programmed by encoding an operation as one or more executable instructions and providing the executable instructions in memory device 110. Processor 115 may include one or more processing units (e.g., in a multi-core configuration).

Processor 115 may include, but is not limited to, a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a non-transitory computer readable medium, including, without limitation, a storage device and/or a memory device. Such instructions, when executed by a processor, cause the processor to perform at least a portion of the methods described herein. The above examples are example only, and thus are not intended to limit in any way the definition and/or meaning of the term processor.

In the example embodiment, memory device 110 is one or more devices that enable information, such as executable instructions and/or other data, to be selectively stored and retrieved. Memory device 110 may include one or more computer readable media, such as, without limitation, dynamic random access memory (DRAM), static random access memory (SRAM), a solid state disk, and/or a hard disk. Memory device 110 may be configured to store, without limitation, executable instructions and/or any other type of data suitable for use with the methods described herein.

In the example embodiment, computing device 105 includes a presentation interface 120 that is coupled to processor 115. Presentation interface 120 is configured to output (e.g., display, print, and/or otherwise output) information, such as, but not limited to, a map of a geographic area including obstructions and existing utility equipment, to a user 125. For example, presentation interface 120 may include a display adapter (not shown in Fig. 1) that is coupled to a display device, such as a cathode ray tube (CRT), a liquid crystal display (LCD), an organic LED (OLED) display, and/or an "electronic ink" display. In some embodiments, presentation interface 120 includes more than one display device. In addition to, or in the alternative, presentation interface 120 may include a printer.

In some embodiments, computing device 105 includes an input interface 130 that receives input from user 125. For example, input interface 130 may be configured to receive a selection of a geographic area, a selection or entry of configuration data (e.g., a maximum interruption occurrence rate), and/or any other information suitable for use with the methods and systems described herein.

In the example embodiment, input interface 130 is coupled to processor 115 and may include, for example, a keyboard, a pointing device, a mouse, a stylus, a touch sensitive panel (e.g., a touch pad or a touch screen), a gyroscope, an accelerometer, a position detector, and/or an audio input interface. A single component, such as a touch screen, may function as both a display device of presentation interface 120 and as input interface 130.

Computing device 105 may include a communication interface 135 coupled to processor 115. Communication interface 135 is coupled in communication with a remote device, such as another computing device 105. For example, communication interface 135 may include, without limitation, a wired network adapter, a wireless network adapter, and/or a mobile telecommunications adapter. Any other device may be considered remote to computing device 105. For example, any other computing device 105 with which computing device 105 communicates via communication interface 135 (e.g., as opposed to communicating via a shared memory device 110) may be considered remote. Alternatively, a device may be considered remote if it is positioned at more than a predetermined distance from computing device 105. The predetermined distance may be expressed, for example, in terms of geography (e.g., 10 meters, 100 meters, or 1 kilometer) and/or network topology (e.g., 1 network link, 2 network links, or 5 network links apart).

In an example embodiment, computing device 105 stores in memory device 110, and/or is operable to access via communication interface 135 (e.g., from another computing device 105), data for use in correcting intermittent utility service outages. For example, such data may include, but is not limited to only including, configuration data (e.g., a maximum interruption occurrence rate), utility equipment data (e.g., locations of utility meters, utility substations, and/or utility transmission lines), and/or utility service interruptions.

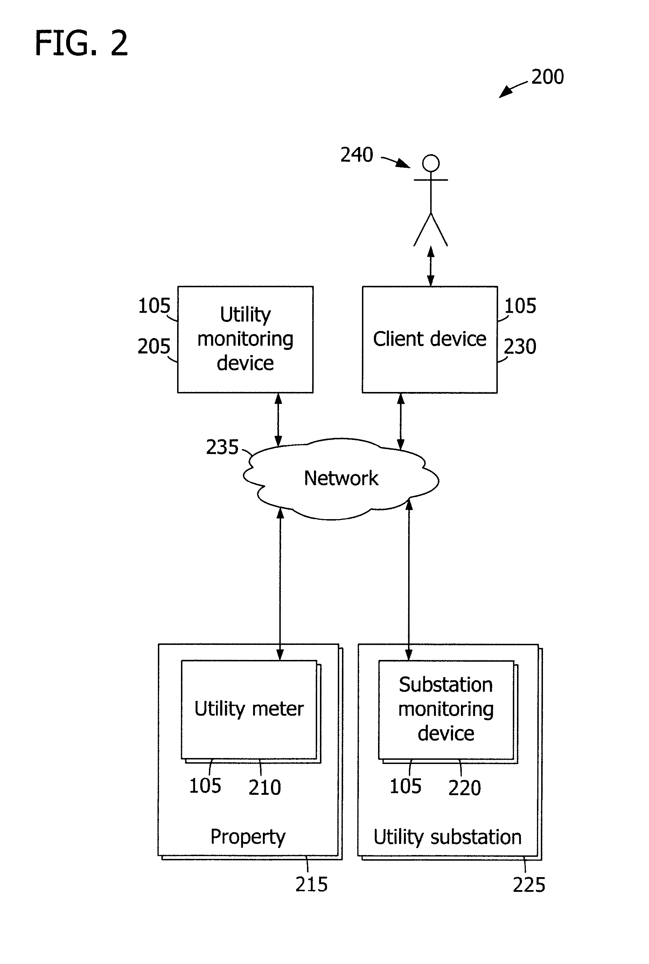

Fig. 2 is block diagram of an example utility monitoring system 200 including a utility monitoring device 205, a plurality of utility meters 210 installed at a plurality of properties 215 (e.g., residential, commercial, and/or industrial properties), a plurality of substation monitoring devices 220 installed at one or more utility substations 225, and a client device 230 that are coupled in communication via a network 235. Network 235 may include, without limitation, the Internet, a local area network (LAN), a wide area network (WAN), a wireless LAN (WLAN), a mesh network, and/or a virtual private network (VPN). While certain operations are described below with respect to particular computing devices 105, it is contemplated that any computing device 105 may perform any of the described operations. In the example embodiment, utility monitoring device 205, utility meter 210, substation monitoring device 220, and client device 230 are computing devices 105 (shown in Fig. 1). Moreover, in the example embodiment, each computing device 105 is coupled to network 235 via communication interface 135 (shown in Fig. 1). In an alternative embodiment, utility monitoring device 205 is integrated with client device 230.

Utility monitoring device 205 is configured to monitor equipment in a utility network, such as utility meters 210 and/or substation monitoring devices 220. Properties 215 and utility substations 225 may be referred to as sites. In an example embodiment, each utility meter 210 and substation monitoring device 220 is located at a site to provide signals to utility monitoring device 205 that are indicative of utility conditions at the site. Such utility conditions may include, without limitation, a current utility input level, a current utility consumption level, a service interruption (e.g., including an elapsed time of interruption), a quantity of devices coupled to a utility meter 210 and/or substation monitoring device 220. In one embodiment, utility meter 210 is an electricity meter, and substation monitoring device 220 is, or is integrated with, a transformer.

Client device 230 interacts with a user 240 (e.g., via input interface 130 and/or presentation interface 120, shown in Fig. 1). For example, client device 230 may be configured to selectively present intermittent outage information and/or an intermittent outage work order to user 240, as described in more detail below.

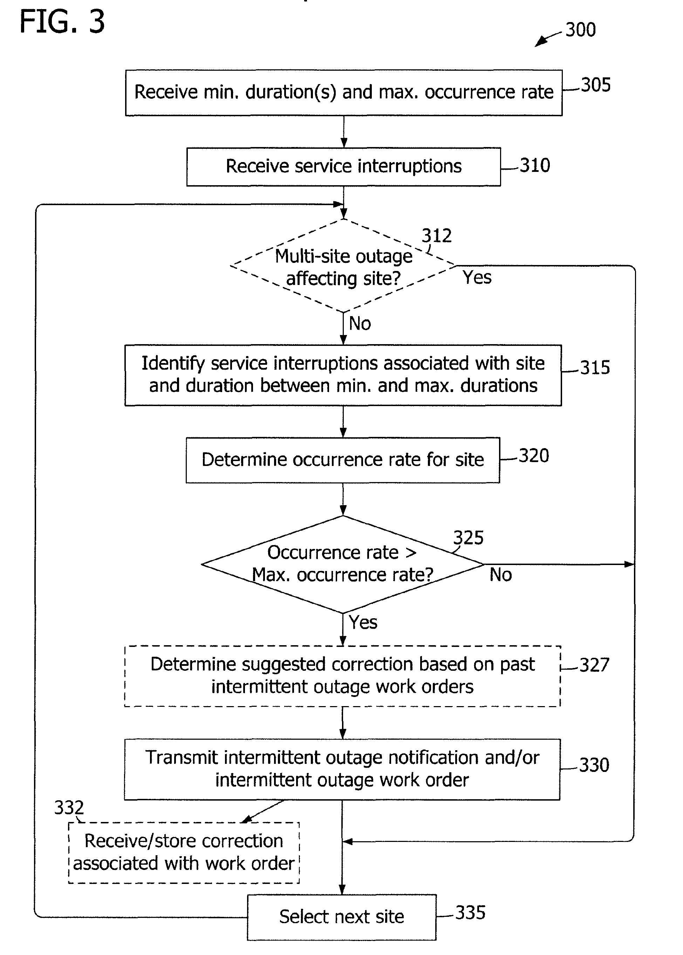

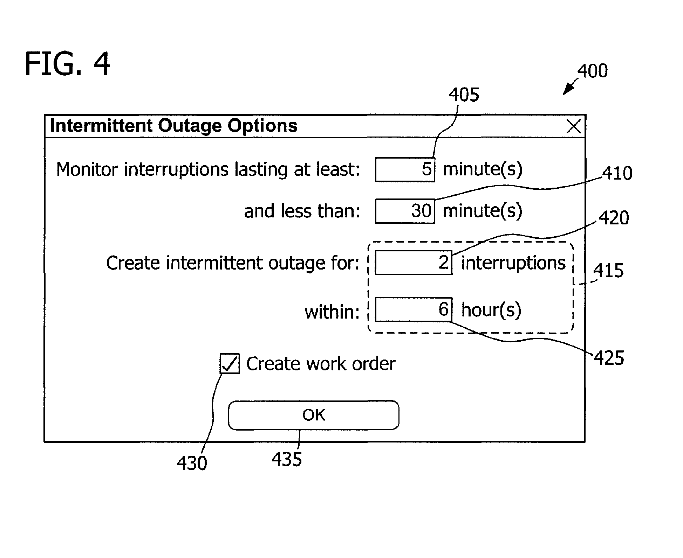

Fig. 3 is a flowchart of an example method 300 that may be used in correcting an intermittent utility service outage. Portions of method 300 may be performed by any one of or any combination of computing devices 105 (shown in Figs. 1 and 2). Fig. 4 is an example graphical interface 400 that may be used to define intermittent outage configuration options.

In the example embodiment, graphical interface 400 is presented by a computing device 105 (e.g., via presentation interface 120, shown in Fig. 1) and may receive input (e.g., selections and/or entries) via input interface 130 (shown in Fig. 1). In another embodiment, one or more of the selections described below are received via communication interface 135 (shown in Fig. 1). For example, a selection may be received via an input interface 130 of a remote computing device 105 and may be transmitted by a communication interface 135 of the remote computing device 105.

Referring to Figs. 2 and 3, in an example embodiment, utility monitoring device 205 receives 305 intermittent outage configuration options, such as a minimum interruption duration, a maximum interruption duration, and/or a maximum interruption occurrence rate. In the example embodiment, graphical interface 400 selectively displays the intermittent outage configuration options and includes a minimum interruption duration field 405 and a maximum interruption duration field 410. Moreover, in the example embodiment, utility monitoring device 205 is programmed to disregard or "filter out" service interruptions having a duration shorter than a minimum interruption duration entered in minimum interruption duration field 405, or having a duration longer than a maximum interruption duration entered in maximum interruption duration field 410.

In some embodiments, the minimum interruption duration and/or the maximum interruption duration may be omitted by selectively entering no value in minimum interruption duration field 405 and/or maximum interruption duration field 410, respectively. If the minimum interruption duration is omitted and/or not entered, utility monitoring device 205 will monitor service interruptions having a duration that is shorter than the maximum interruption duration (if specified). If the maximum interruption duration is omitted and/or not entered, utility monitoring device 205 will monitor service interruptions having a duration that is longer than the minimum interruption duration (if specified).

Graphical interface 400 also includes an occurrence rate section 415 that enables a user to enter a maximum interruption occurrence rate. Utility monitoring device 205 determines, based on the maximum interruption occurrence rate entered, whether a series of one or more service interruptions constitutes an intermittent outage, as described in more detail below. In an example embodiment, occurrence rate section 415 includes an interruption quantity field 420 and a duration field 425. In the example embodiment, an intermittent service outage is defmed as an occurrence of *X* service interruptions within a duration *Y*, wherein *X* is the interruption quantity entered in interruption quantity field 420, and *Y* is the duration entered in duration field 425.

In the example embodiment, graphical interface 400 also includes a work order option 430. When the user selects work order option 430, utility monitoring device 205 automatically creates a work order when an intermittent service outage is detected, as described in more detail below.

In an example embodiment, a client device 230 presents graphical interface 400 to a user 240 and receives inputs to graphical interface 400 from user 240. Utility monitoring device 205 receives 305 the intermittent outage configuration options from client device 230. For example, client device 230 may transmit the intermittent outage configuration options when the user selects an accept button 435.

Utility monitoring device 205 repeatedly receives 310 meter states and/or service interruptions from utility meters 210 and/or from substation monitoring devices 220. In some embodiments, utility monitoring device 205 receives 310 meter states transmitted from a plurality of utility meters 210 and, based at least in part on the received meter states, creates service interruptions. For example, a meter state may indicate a current utility input level, a current utility consumption level, and/or a quantity of devices coupled to a utility meter 210.

Each service interruption is associated with a start time, an end time, and/or a duration. A service interruption may also be associated with a site and/or a utility meter 210 or substation monitoring device 220 that transmitted the service interruption. In example embodiments, utility monitoring device 205 stores service interruptions in a memory device 110 (shown in Fig. 1).

Utility monitoring device 205 identifies 315 a plurality of service interruptions associated with a site. In some embodiments, utility monitoring device 205 identifies 315 service interruptions that are also associated with a duration that is longer than a predetermined minimum interruption duration, if specified, and shorter than a predetermined maximum interruption duration, if specified. In addition to the above criteria, utility monitoring device 205 may identify 315 service interruptions that are associated with an occurrence time (e.g., a start time or an end time) having an age that is less than a predetermined maximum age. For example, if the predetermined maximum age is twelve months, utility monitoring device 205 may identify 315 only service interruptions associated with an occurrence time within the previous twelve months.

Utility monitoring device 205 determines 320 an occurrence rate associated with the site based at least in part on the service interruptions identified 315. For example, the occurrence rate may be determined 320 by identifying 315 the quantity of service interruptions that occurred within a predetermined duration prior to the current time. In example embodiments, the predetermined duration is entered in duration field 425 of graphical interface 400 (both shown in Fig. 4).

Utility monitoring device 205 compares 325 the occurrence rate to a predetermined maximum interruption occurrence rate. When the determined interruption occurrence rate exceeds the maximum interruption occurrence rate, utility monitoring device 205 transmits 330 an intermittent outage notification to a remote device, such as a client device 230. For example, the intermittent outage notification may be transmitted 330 as an email, a Short Message Service (SMS) or "text" message, a software application message, and/or any other form of electronic notification.

In some embodiments, utility monitoring device 205 creates and transmits 330 an intermittent outage work order representing an instruction for a technician to address the intermittent outage. The work order may include, but is not limited to only including, an identifier of the site (e.g., a name, an address, and/or geographic coordinates), the determined occurrence rate, and/or the identified service interruptions. In one embodiment, the work order is transmitted 330 to a trouble management system, and a technician is automatically dispatched by the trouble management system. Alternatively, the trouble management system may be integrated with utility monitoring device 205.

Utility monitoring device 205 selects 335 the next site and then identifies 315 service interruptions within the selected site, as described above. When all sites have been processed, utility monitoring device 205 may select 335 the first site, such that method 300 is repeated for all sites.

Some embodiments facilitate preventing large-scale outages from interfering with the detection of intermittent outages. As used herein, a large-scale outage represents a utility service interruption that affects multiple sites and may be referred to as a multi-site outage. For example, a multi-site outage may be caused by a storm, an earthquake, and/or a failure in a transmission line, a transformer, or another piece of utility equipment. In such embodiments, utility monitoring device 205 determines 312 whether a multi-site outage condition affecting the site currently exists. For example, utility monitoring device 205 may be integrated with, and/or communicate with, a trouble management system that provides outage information, including a geographic area and/or a plurality of sites affected by each outage. In example embodiments, utility monitoring device 205 determines 312 whether the site being evaluated in method 300 is currently affected by a multi-site outage. If the site is affected by a multi-site outage, utility monitoring device 205 selects 335 the next site to evaluate. If the site is not affected by a multi-site outage, utility monitoring device 205 continues with identifying 315 service interruptions, as described above.

In some embodiments, utility monitoring device 205 receives and stores 332 corrections associated with intermittent work orders. For example, a technician may submit one or more corrections to utility monitoring device 205 and/or the trouble management system when an intermittent outage has been resolved. A correction may include, without limitation, a corrective procedure, an equipment replacement, an equipment configuration, and/or any other action taken by a technician to resolve an intermittent outage. In some scenarios, the technician may be unable to determine a correction for an intermittent outage, and the work order may be completed without a correction. Accordingly, some completed intermittent work orders may be associated with corrections, and some may not.

Further, in some embodiments, corrections that have been stored 332 and associated with previous intermittent outage work orders are used by utility monitoring device 205 to determine 327 a suggested correction for a current intermittent outage work order. For example, utility monitoring device 205 may determine 327 the suggested correction based on intermittent outage work orders associated with the current site and/or with one or more sites other than the current site. In example embodiments, utility monitoring device 205 determines 327 the suggested correction at least in part by determining the quantity of intermittent outage work orders associated with each correction and identifying the correction that is associated with the greatest quantity of intermittent outage work orders. The suggested correction may be associated with and/or included in the intermittent outage notification and/or intermittent outage work order transmitted 330 by utility monitoring device 205.

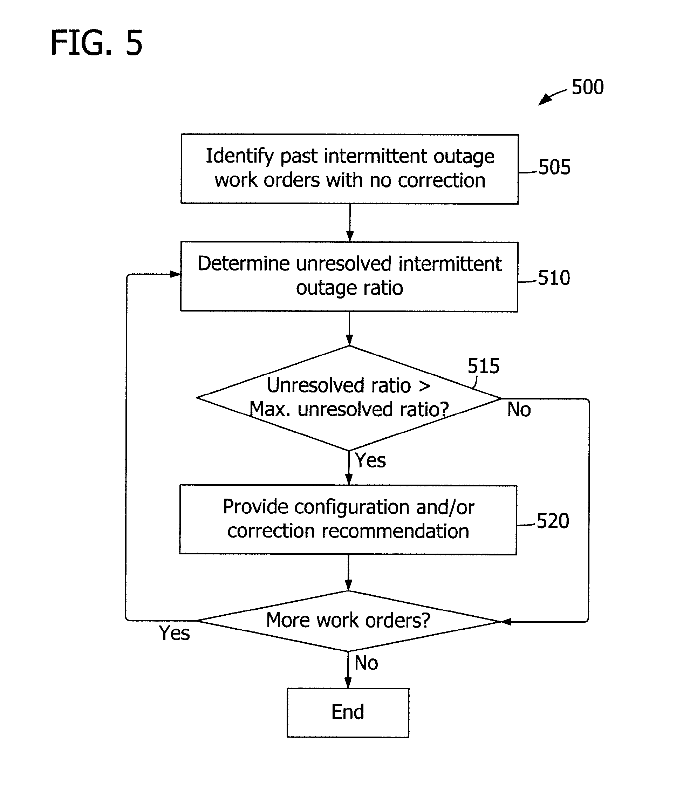

Some embodiments facilitate automatically suggesting an adjustment to intermittent outage configuration options, such as a minimum interruption duration, a maximum interruption duration, and/or a maximum interruption occurrence rate. Fig. 5 is a flowchart of an example method 500 for providing a configuration recommendation. As described above, in some embodiments, some completed work orders may be associated with a correction, and other completed work orders may not be associated with a correction. Completed work orders associated with a correction may be referred to as resolved, whereas completed work orders not associated with a correction may be referred to as unresolved.

Referring to Figs. 2 and 5, in example embodiments, utility monitoring device 205 identifies 505 the quantity of past, unresolved intermittent outage work orders. In some embodiments, the identification 505 of unresolved intermittent outage work orders is limited to work orders having an age less than a predetermined maximum age.

Utility monitoring device 205 determines 510 an unresolved intermittent outage ratio representing the proportion of past intermittent outage work orders that are unresolved. The unresolved intermittent outage ratio is compared 515 to a predetermined maximum unresolved intermittent outage ratio. When the unresolved intermittent outage ratio is greater than the maximum, utility monitoring device 205 provides 520 to a user (e.g., by transmitting and/or displaying a notification) a configuration recommendation and/or a correction recommendation.

A configuration recommendation includes a proposed modification (e.g., an increase or a decrease) to the minimum interruption duration, the maximum interruption duration, and/or the maximum interruption occurrence rate. In example embodiments, utility monitoring device 205 provides 520 a configuration recommendation proposing that the minimum interruption duration and/or the maximum interruption occurrence rate be increased when the unresolved intermittent outage ratio exceeds the maximum unresolved intermittent outage ratio. Such embodiments enable a utility network operator to reduce or avoid the cost of dispatching technicians to address service interruptions for which no correction is likely to be determined.

A correction recommendation includes a proposed action to be taken by a technician to identify a correction for the unresolved intermittent outages. For example, the proposed action may include prolonged monitoring and/or detailed inspection of equipment at a site. Further, the correction recommendation may be associated with a work order created in response to a subsequent intermittent outage, such that the dispatched technician is encouraged to invest additional effort to prevent future intermittent outages. In some embodiments, when an intermittent outage work order is created, unresolved work order information (e.g., the unresolved past intermittent outage work orders and/or the unresolved intermittent outage ratio) associated with the corresponding site is included with the intermittent outage work order. Such embodiments facilitate providing to a technician an indication of the recurrent nature of the intermittent outage.

Embodiments described herein facilitate distinguishing repeated temporary interruptions from a single temporary service interruption, such that the operator of a utility network can easily identify and resolve intermittent service outages. Moreover, in some embodiments, a correction to an intermittent utility service outage is automatically determined and provided based on past intermittent outage work orders, thus enabling a technician to efficiently resolve such an outage. Accordingly, the inconvenience and downtime costs associated with intermittent outages may be reduced.

Embodiments described herein may be performed using a computer-based and/or computing-device-based operating environment as described herein. A computer or computing device may include one or more processors or processing units, system memory, and some form of non-transitory computer-readable media. Example non-transitory computer-readable media include flash memory drives, hard disk drives, digital versatile discs (DVDs), compact discs (CDs), floppy disks, and tape cassettes. By way of example and not limitation, computer-readable media comprise computer storage media and communication media. Computer-readable storage media are non-transitory and store information such as computer-readable instructions, data structures, program modules, or other data. Communication media typically embody computer-readable instructions, data structures, program modules, or other data in a modulated data signal such as a carrier wave or other transport mechanism and include any information delivery media. Combinations of any of the above are also included within the scope of computer-readable media.

Although described in connection with an example computing system environment, embodiments of the invention are operational with numerous other general purpose or special purpose computing system environments or configurations. Examples of well known computing systems, environments, and/or configurations that may be suitable for use with aspects of the invention include, but are not limited to, mobile computing devices, personal computers, server computers, hand-held or laptop devices, multiprocessor systems, gaming consoles, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the figures and described herein. Other embodiments of the invention may include different computer-executable instructions or components having more or less functionality than illustrated and described herein.

Aspects of the invention transform a general-purpose computer into a special-purpose computing device when configured to execute the instructions described herein.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other apparatus and methods.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

While the invention has been described in terms of various specific embodiments, those skilled in the art will recognize that the invention may be practiced with modification within the scope of the claims.

## Claims

1. A system (100) for use in correcting an intermittent utility service outage, said system comprising:
a memory device (110) configured to store a plurality of service interruptions, wherein each service interruption is associated with at least one site of a plurality of sites;
a processor (115) coupled to said memory device and programmed to determine (320) an interruption occurrence rate corresponding to a first site of the plurality of sites based on service interruptions associated with the first site; and
a communication interface (135) coupled to said processor and configured to transmit (330) an intermittent outage notification to a remote device when the determined interruption occurrence rate exceeds a predetermined maximum interruption occurrence rate.

2. A system (100) according to Claim 1, wherein said processor (115) is further programmed to create an intermittent outage work order when the determined interruption occurrence rate exceeds the maximum interruption occurrence rate, said communication interface transmits (330) an intermittent outage notification at least in part by transmitting the intermittent outage work order.

3. A system (100) according to Claim 2, wherein the intermittent outage work order is a current intermittent outage work order, said memory device (110) is further configured to store a plurality of past intermittent outage work orders associated with a correction, said processor (115) is further programmed to:
determine (327) a suggested correction based on the corrections associated with the past intermittent outage work orders; and
associate the suggested correction with the current intermittent outage work order.

4. A system (100) according to Claim 1, 2 or 3, wherein said memory device (110) is configured to store service interruptions at least in part by storing a plurality of electricity service interruptions provided by one or more electricity meters, said processor (115) is programmed to determine (320) the interruption occurrence rate by determining an electricity service interruption occurrence rate based on the electricity service interruptions.

5. A system (100) according to any one of Claims 1 to 4, wherein each service interruption is further associated with an occurrence time, said processor (115) is programmed to determine the interruption occurrence rate at least in part by determining a quantity of service interruptions associated with an occurrence time having an age that is less than a predetermined maximum age.

6. A system (100) according to any one of Claims 1 to 5, wherein each service interruption is further associated with an interruption duration, said processor (115) is programmed to determine the interruption occurrence rate based on service interruptions associated with a duration that is longer than a predetermined minimum interruption duration.

7. A system (100) according to any one of Claims 1 to 6, wherein said communication interface (135) is further configured to repeatedly receive meter states transmitted by a plurality of utility meters, and said processor (115) is further programmed to create the service interruptions based at least in part on the received meter states.

8. A system (100) according to any one of Claims 1 to 7, wherein the service interruptions are associated with a first site, said processor (115) is further programmed to determine (327) a suggested correction based on past intermittent outage work orders that are associated with a second site.

9. A method for use in correcting an intermittent utility service outage, said method comprising:
identifying (315), by a computing device, a plurality of service interruptions associated with a site and with a duration that is longer than a predetermined minimum interruption duration;
determining (300), by the computing device, an interruption occurrence rate corresponding to the site based at least in part on the identified service interruptions; and
transmitting (330) an intermittent outage notification from the computing device to a remote device when the determined interruption occurrence rate exceeds a predetermined maximum interruption occurrence rate.

10. A method according to Claim 9, further comprising determining (327) a suggested correction based at least in part on one or more corrections associated with a plurality of past intermittent outage work orders.

11. A method according to Claim 10, wherein:
the service interruptions are associated with a first site, and the suggested correction is determined based on past intermittent outage work orders that are associated with a second site; and/or
determining (327) the suggested correction comprises identifying a correction that is associated with a quantity of intermittent outage work orders that is greater than a quantity of intermittent outage work orders with which the other corrections are associated; and/or
transmitting (330) the intermittent outage notification comprises transmitting a current intermittent outage work order that is associated with the suggested correction.

12. A method according to Claims 8, 9, 10 or 11, further comprising:
determining (312) whether a multi-site outage condition currently exists, wherein the multi-site outage condition represents a service interruption that affects a plurality of sites; and
transmitting (330) the intermittent outage notification only when no multi-site outage condition currently exists.

13. A method according to any one of Claims 9 to 12, further comprising:
determining a quantity of past intermittent outage work orders that are not associated with a correction to create an unresolved intermittent outage ratio; and
providing (520) a configuration recommendation when the unresolved intermittent outage ratio is greater than a predetermined maximum unresolved intermittent outage ratio, wherein the configuration recommendation includes a proposed modification to at least one of the predetermined minimum interruption duration and the predetermined maximum interruption occurrence rate.

14. A method according to any one of Claims 9 to 13, further comprising creating the plurality of service interruptions based on data received from a plurality of utility meters.

15. One or more non-transitory computer-readable storage media having computer-executable instructions embodied thereon, wherein when executed by at least one processor, the computer-executable instructions cause the at least one processor to perform a method according to any one of Claims 9 to 14.
